# EUROPÄISCHE PATENTSCHRIFT

(11) **EP 1 894 406 B1**
(45) Veröffentlichungstag und Bekanntmachung des Hinweises auf die Patenterteilung: **14.09.2011**
(21) Anmeldenummer: 06741024.1
(22) Anmeldetag: 30.05.2006
(51) Int. Cl.: H04N 1/54, H04N 1/52

(54) **DRUCKVERFAHREN**
PRINTING METHOD
PROCEDE D'IMPRESSION

(30) Priorität: 08.06.2005 AT 9682005
(43) Veröffentlichungstag der Anmeldung: 05.03.2008
(73) Patentinhaber: Constantia Teich GmbH, 3200 Weinburg (AT)
(72) Erfinder: VEIT, Werner, A-3511 Krems - Brunnkirchen (AT); HUMER, Friedrich, A-3100 St. Pölten (AT); SCHEIKL, Heribert, A-3142 Langmannersdorf (AT)
(74) Vertreter: Patentanwälte Barger, Piso & Partner
(86) Internationale Anmeldenummer: PCT/AT2006/000225
(87) Internationale Veröffentlichungsnummer: WO 2006/130890

(56) Entgegenhaltungen:
- EP-A- 1 239 662
- GB-A- 2 343 141
- US-A- 5 982 992
- US-A- 6 113 210
- US-A1- 2003 002 061
- ANONYMOUS: ":Grand SherpaMatic" INTERNET ARTICLE, [Online] 2004, XP002396764 Gefunden im Internet: URL:http://agfabeint01.net.agfa.com/bu/gs/ dms/Marketing.nsf/AllDocs/0B588FFE95AAC617 C1256FB5005E78B8/$FILE/br_grandmatic_2004- 06-01_en%201.0.pdf> [gefunden am 2006-08-29] & ANONYMOUS: "Agfa launches wide format seven-color inkjet proofer" INTERNET ARTICLE, [Online] 10. Oktober 2004 (2004-10-10), Gefunden im Internet: URL:http://www.agfa.com/en/gs/news_events/ latest_news/archive/20041010_wideformatpri nting_graphexpo.jsp> [gefunden am 2006-08-29]

## Beschreibung

Die Erfindung betrifft ein Druckverfahren, insbesondere zum Bedrucken von Platinen bzw. Beuteln für die Verpackung von Lebensmitteln, auf der Basis des Siebenfarbendrucks mit den vier Grundfarben Cyan, Magenta, Gelb und Schwarz und drei weiteren Farben, von denen zwei Orange und Grün sind.

Derartige Druckverfahren sind aus der GB 2 343 141 A (nur sechs Farben), der EP 761 434 A (ebenfalls nur sechs Farben) und der US 2004/0089184 A (ein sehr spezielles Druckverfahren für Golfbälle mit 2, 4, 6 oder 8 Farben) bekannt. Ein weiterer Siebenfarbendruck ist aus der weiter unten detailliert beschriebenen US 5,751,326 A bekannt, dabei wird als siebente Farbe Blau venvendet. Die eben erwähnte GB 2 343 141 A verwendet die Farben Cyan, Gelb, Magenta, Schwarz, Orange und Grün und findet insbesondere Anwendung beim Bedrucken von Metalldosen. Weiterhin erwähnt die US 5,982,992 die Möglichkeit, "mid-gray"-, also Graufarben, einer Farbpalette hinzuzufügen, um akkurate Farbwiedergabe insbesondere von Pastelltönen zu erreichen. All diese Verfahren können die in der Folge angegebenen Probleme nicht lösen.

Lebensmittel für Tier und Mensch wie Suppenpulver, Kaffee, Bonbons, festes, stückiges Tierfutter, etc. werden oft in Beuteln aus mehrschichtigen Folien verpackt, andere Lebensmittel, insbesondere flüssige, viskose oder gelierte Lebensmittel, werden in Schalen öder Tassen aus Kunststoff oder Aluminium gefüllt, die mit sogenannten Platinen verschlossen werden. Das Bedrucken dieser Beutel bzw. Platinen stellt eine wichtige Anwendung des im Folgenden beschriebenen Verfahrens dar.

Druckverfahren beruhen allgemein auf dem Prinzip der sogenannten subtraktiven Farbmischung, bei dem durch das Übereinanderdrucken der Farben Cyan, Magenta und Gelb die verschiedenen Farben des Spektrums erzeugt werden. So ergibt Cyan mit Gelb Grün, Cyan mit Magenta Blau und Magenta mit Gelb Rot. Beim Übereinanderdrucken aller drei Farben erhält man Schwarz.

Zu unterscheiden von dieser subtraktiven Farbmischung ist die additive Farbmischung, die durch Projektion verschiedener Farben auf einen weißen Untergrund erhalten werden. Dabei geht man von den Farben Rot, Grün und Blau aus, durch Übereinanderprojektion von Rot und Grün erhält man Gelb, von Rot und Blau Magenta und von Grün und Blau Cyan. Wenn alle drei Farben übereinander projektiert werden, erhält man Weiß.

Die subtraktive Farbmischung, die eng an die tatsächlich verwendeten Pigmente geknüpft ist, weist in der Praxis zwangsläufig eine Reihe von Abweichungen vom geschilderten Ideal auf, sodass der aus der Theorie unmittelbar entspringende und einsichtige Dreifarbendruck bei professionellen Druckverfahren keine merkliche Rolle spielt. Zumindest Schwarz wird beim professionellen Druck noch zusätzlich verwendet, um die Helligkeit beeinflussen zu können, ohne den Farbton zu beeinflussen und um zu einem tiefen sauberen Schwarz zu gelangen, was durch das Übereinanderdrucken der drei Grundfarben nie wirklich gelingt.

Beim realen Druck kommt noch eine Besonderheit dazu, dass nämlich die einzelnen Farben, zu denen im folgenden immer auch Schwarz gerechnet wird, sofern nichts Gegenteiliges angeführt wird, in Form von Punkten, die in einem zumeist quadratischen Raster angeordnet sind, aufgebracht werden. Gängige Raster haben dabei eine Größenordnung von 54 Rasterzellen pro Zentimeter, entsprechend 54² = 2916 Rasterzellen/cm². Dabei ist es bei üblichen Druckverfahren möglich, jeden Punkt einer Farbe, soferne er aufgetragen wird, in verschiedenen Abstufungen innerhalb der Grenzen von 1 % der Fläche bis 100% der Fläche einer Rasterzelle (entspricht dem Elementarteilchen des Druckes) aufzutragen. Dabei bedeutet diese Flächenangabe, dass bei Auftragung nur einer Farbe mit 1 % die Unterlage zu 1 % ihrer Fläche mit der gewählten Farbe bedeckt ist und bei 100 % zu 100 %. Letzteres kann aber ohne Überlappungen nicht erreicht werden, sodass hier der Farbauftrag des Einzelpunktes größer ist, als es dem 100-fachen des kleinen 1 %-Punktes entspricht.

Wenn nun, wie es für die Schaffung von Mischfarben zwingend notwendig ist, eine Punktgröße von merklich unter 50% aufgetragen wird und zumindest eine der beiden anderen Farben (ausgenommen Schwarz) ebenfalls in einer vergleichbaren Größe aufgetragen wird, so kommt es zu Überlappungen zwischen den einzelnen Punkten, die der eingangs erwähnten subtraktiven Farbmischung entsprechen. Da aber die Einzelfarbpunkte für den Betrachter zu klein und zu nahe aneinanderliegend ausgebildet sind, um noch als Einzelfarbpunkte wahrgenommen werden zu können, kommt es im Auge bzw. Hirn des Betrachters auch zu einer additiven Farbmischung.

Trotz dieser Größen- und Erkennbarlceitsverhältnisse kommt es beim Bedrucken von Flächen, die sich über mehrere Rasterzellen erstrecken, bei einer solchen Aufbringung mehrerer Farben beim Betrachter zum sogenannten "Moirée"-Effekt, das heißt, das Auge vermeint eine Art Abfolge von Höhenschichtlinien auf der so bedruckten Fläche zu erkennen.

Es ist nun seit langem bekannt, zur Vermeidung dieses Effektes die Raster für die einzelnen Farben nicht parallel zueinander auf den einzelnen Druckstöcken bzw. Druckwalzen anzubringen, sondern in vorgegebenen Winkellagen zueinander, wodurch sich die Anordnung der farbigen Punkte zueinander von Rasterzelle zu Rasterzelle (egal, von welchem der Raster man nun ausgeht) ändert und so den "Moirée"-Effekt, der auf der zyklischen Wiederholung der Anordnungen beruht, vermeidet.

Die oben kurz erwähnte EP 761 434 A schlägt für einen Vierfarbendruck unter Verwendung von Farbsieben mit 60°-iger Symmetrie vor, Cyan bei 60°, Schwarz bei 45°, Magenta bei 75° und Gelb bei gleicher Orientierung wie Magenta anzuordnen, wobei Gelb bevorzugt unterschiedlich zu Schwarz orientiert sein soll. Über die Anordnung beim Siebenfarbendruck wird nichts ausgesagt.

Für die meisten der gewerblich angewandten Druckerzeugnisse die nicht in Buchform vorliegen sondern beispielsweise als Verpackung der eingangs genannten Art verwendet werden, ist es von großer Bedeutung, dass einzelne Farben in ganz besonderer, vom Kunden vorgegebener Qualität gedruckt werden können. Es handelt sich dabei meistens um sogenannte "Hausfarben", die speziell für das Unternehmen stehen und dem Konsumenten die Assoziation der Verpackung mit diesem Unternehmen erleichtern oder gar erst ermöglichen. Es wird in diesem Zusammenhang auf die vielfachen Versuche von Unternehmen hingewiesen, abstrakte Farben als Marke für ihr Unternehmen schützen zu lassen und solche abstrakte Farben bei der Verpackung und in der Werbung gezielt und dominant zu verwenden. Für die Bedeutung und die Durchsetzung solcher Farben sei nur darauf hingewiesen, dass ein merklicher Anteil der Grundschüler Europas der Meinung ist, dass das Fell von Kühen die Farbe Violett hätte, was zeigt, wie wichtig die Druckqualität für Verpackungen ist.

Für die Verpackungsindustrie bedeutet dies, dass derartige Farben, Schmuckfarben genannt, zusätzlich zu den üblichen vier Farben speziell dafür verwendet werden, den Schriftzug, ein bestimmtes Logo oder einen Teil der Produkte, die auf der Verpackung abgebildet sind, mit diesen Schmuckfarben in ganz bestimmter Qualität auszubilden. Es hat sich im Wesentlichen durchgesetzt, zusätzlich zu den vier Grundfarben drei Schmuckfarben zu verwenden. Diese Schmuckfarben werden fertig gemischt und nach Kundenvorgaben standardisiert (und auf die jeweilige Druckunterlage abgestimmt) in die Druckerei gebracht und verwendet, wodurch ihre Verwendung zuverlässig die gewünschten Resultate ergibt.

In der täglichen Praxis des Druckens bringt dies aber mit sich, dass beim Umrüsten einer solchen Siebenfarbendruckmaschine von einem Druckauftrag zum nächsten nicht nur die Druckwalzen an allen sieben Stationen getauscht werden müssen, sondern dass an den drei Stationen mit den Schmuckfarben auch alle Farbbehälter, Leitungen, Pumpen, etc., zur Gänze gewechselt werden müssen, da ja die Schmuckfarben untereinander (von Kunde zu Kunde) nicht kompatibel sind. Der damit verbundene Mehraufwand gegenüber den Stationen der vier üblichen Farben ist ganz enorm und wächst darüber hinaus in den letzten Jahren deutlich an, da mehr und mehr Unternehmen nicht bereit sind, Verpackungsmaterial auf Lager zu legen sondern die Verpackungen in immer kleineren Losgrößen erwerben. Dabei sind sie aber auch nicht, oder nur schwer, dazu zu bringen, die anteilig immer größer werdenden Rüstkosten zu übernehmen.

Es besteht somit ein großer Bedarf an einem Druckverfahren, bei dem auf die Verwendung der Schmuckfarben verzichtet werden kann und das in der Lage ist, die Schmuckfarben zuverlässig in der vorgegebenen Qualität zu drucken.

Ohne auf diese Problematik näher einzugehen, hat es schon verschiedentlich Versuche zur Verbesserung des Vierfarbendruckes gegeben, beispielsweise in den eingangs genannten Dokumenten. Am Markt erfolgreich ist dabei das Verfahren, das in der US 5,751,326 A beschrieben ist. Bei diesem Verfahren wird zusätzlich zum üblichen Farbsystem des Vierfarbendrucks Cyan, Magenta, Gelb und Schwarz (CMYK, von der englischen Bezeichnung abgeleitet) das Dreifarbensystem Rot, Grün, Blau (RGB) verwendet, aus dem ursprünglichen Farbdreieck wird daher ein Farbsechseck mit den entsprechend vermehrten Möglichkeiten des Drucks. Im wesentlichen beschäftigt sich die genannte Druckschrift mit der Möglichkeit, bestehende bzw. vorgegebene Vorlagen mit üblichen Geräten zu scannen und dabei die Informationen zu erhalten, die zur zielgerichteten Verwendung der sechs Farben plus Schwarz notwendig sind. Dabei wird prinzipiell so vorgegangen, dass die Farbbereiche, die durch Mischungen im CMYK-Verfahren beim Überdrucken zweier beteiligter Farben nicht mit der gewünschten Farbtiefe und Brillianz erreicht werden können, durch Einbeziehung der entsprechend dazwischen liegenden Farbe des RGB-Systems zu schaffen, wobei natürlich auch in diesem Fall die entsprechende Farbe des RGB-Systems (flächenmäßig dominant) mit der notwendigen Farbe des CMYK-Systems (mit kleinem Flächenanteil) gemeinsam gedruckt wird.

Da diese Druckschrift sich, wie bereits erwähnt, hauptsächlich mit der passenden Erfassung des Druckbildes und der Aufteilung auf die zur Verfugung stehenden Farben beschäftigt, wird über den eigentlichen Druckvorgang und die dort auftretenden Probleme nichts gesagt.

Obwohl dieses System unter der Bezeichnung OPALTONE am Markt verschiedentlich verwendet wird, haften ihm Nachteile an, die in den meisten Fällen auch weiterhin die Verwendung von Schmuckfarben notwendig machen:
Die drei hinzugekommenen Farben RGB müssen untereinander die gleichen Subtraktionsbedingungen erfüllen wie die ursprünglichen Komplementärfarben CMY, sodass durch ihre Verwendung zwar die "Flachstellen", die sich beim Mischen von CMY ergeben,
ausgerundet werden, doch ändert sich prinzipiell nichts an der Tatsache, dass hier eigentlich nur das Grundprinzip, im Farbkreis verdreht, ein zweites Mal angewandt wird.
Dazu kommt, dass Helligkeitsabstufungen, die durch den Zusatz von Schwarz erzielt werden, oft hart und unangenehm sind.

Es ist nun die Aufgabe der Erfindung, die obengenannten Ziele zu erreichen und ein Druckverfahren zu schaffen, das in der Lage ist, auf die Verwendung gesonderter Pigmentmischungen für die Schmuckfarben zu verzichten, und es ermöglicht, mit den üblichen Siebenfarbendruckwerken dieses Ziel zu erreichen.

Erfindungsgemäß erreicht man diese Ziele dadurch, dass die siebente Farbe Grau ist und dass die Winkelung der Raster für Schwarz, Grau und Orange übereinstimmend gewählt werden. So erreicht man überraschenderweise neben der Erweiterung der ursprünglichen Komplementärfarben in den kritischen Bereichen, dass durch das Grau Schattierungsmöglichkeiten geschaffen werden, die durch Schwarz unmöglich zu erzielen sind und es hat sich weiters gezeigt, dass diese Farben, selbst wenn, was nicht häufig ist, in einer Zelle des Rasters tatsächlich zwei oder sogar alle drei ausgedruckt werden, durch die Dominanz des Schwarz bzw. Grau zu keinem Moirée-Effekt führen.

Gleichermaßen hat es sich als vorteilhaft erwiesen, dass Magenta und Grün in Rastern mit übereinstimmender Winkelung verwendet werden, während Gelb und Cyan in Rastern mit jeweils eigener Winkelung vorliegen sollen.

Besonders gute Ergebnisse erhält man, wenn die Raster, bezogen auf den willkürlich mit der Winkelung 0° angenommenen Raster von Gelb, folgende Winkel aufweisen: Cyan 15,6°, Magenta bzw. Grün 45,5°, und Orange bzw. Grau bzw. Schwarz 74,8°. Dabei ist es selbstverständlich nicht notwendig, dass der Raster von Gelb tatsächlich an der Maschine die Winkelung 0° aufweist, es sollen nur die anderen Raster gegenüber dem Raster von Gelb die genannten Winkelungen aufweisen.

Es spielen aber auch die Dichtewerte der einzelnen Farben eine Rolle, dabei ist die Dichte definiert als der dekadische Logarithmus des Quotienten der Remission der unbedruckten Oberfläche zur bedruckten Oberfläche. Die Remission der unbedruckten Oberfläche hängt im Wesentlichen vom Material und der Struktur der Oberfläche ab, die Remission der bedruckten Oberfläche hängt zusätzlich von der Farbstoffdicke ab, sodass die Festlegung des Dichtewertes einer Farbe bei gegebenem Untergrund einer Aussage über die aufzubringende Farbdicke entspricht. Diese Dichtewerte sind optimal die folgenden

| | | | | | | | |
|---|---|---|---|---|---|---|---|
| Cyan | 1,4 | Magenta | 1,4 | Gelb | 1,2 | Schwarz | 1,6 |
| Orange | 1,2 | Grün | 1,1 | Grau | 0,6 | | |

Als hervorragend für das erfindungsgemäße Verfahren geeignete Pigmente haben sich die folgenden herausgestellt:

| | | |
|---|---|---|
| Cyan P.B. 15:4 | Formelnummer 74160 | CAS:147-14-8 |
| Magenta P.R. 57:1 | Formelnummer 15850:1 | CAS: 5281-04-9 |
| Gelb P.Y. 126 | Formelnummer 21101 | CAS: 90268-23-8 |
| Schwarz P.B1.7/P.B1. 15:4 | | |
| Orange P.O. 34 | Formelnummer 21115 | CAS: 15793-73-4 |
| Grün P.G. 7 | Formelnummer 74260 | CAS: 1328-53-6 |
| Grau P.B. 7 | Formelnummer 77266 | CAS: 1333-86-4 |

Diese Pigmentwerte sind in der ColourIndexliste der Society of Dyers and Colourists sowie in der Chemical Abstract Service Registery (CAS) definiert und stellen handelsübliche Größen dar. Die farbmetrische Definition der einzelnen Farben, bestimmt mit einem Spektralphotometer SpectroEye mit der Seriennummer 14370 der Firma Gretag ergibt folgende Werte:

| Orange: L* = 68,59 | Cyan: L* = 48,72 | Schwarz : L* = 15,15 | |
|---|---|---|---|
| a* = 44,64 | a* = -37,51 | a* = -4,56 | |
| b* = 84,11 | b* = -51,56 | b* = 0,26 | |
| C* = 95,22 | C* = 63,76 | C* = 4,57 | |
| h = 62,04 | h = 233,96 | h =176,73 | |
| | | | |

| Gelb: L* = 85,34 | Grau: L* = 59,21 | Magenta: L* = 43,57 | Grün: L* = 57,58 |
|---|---|---|---|
| a* = -6,20 | a* = -3,48 | a* = 73,39 | a* = -58,22 |
| b* = 90,86 | b* = 0,78 | b* = -2,68 | b* = 22,47 |
| C* = 91,08 | C* = 3,57 | C* = 73,44 | C* = 62,41 |
| h = 93,90 | h =167,34 | h = 357,91 | h = 158,90 |

| | | | |
|---|---|---|---|
| Die Buchstaben bzw. "*" sind Bestandteile der CIELAB - Werte und dem Fachmann geläufig. | | | |

## Patentansprüche

1. Druckverfahren, insbesondere zum Bedrucken von Platinen bzw. Beuteln für die Verpackung von Lebensmitteln, auf der Basis des Siebenfarbendrucks mit den vier Grundfarben Cyan, Magenta, Gelb und Schwarz und drei weiteren Farben, von denen zwei Orange und Grün sind, wobei die siebente Farbe Grau ist, und die Winkelung der Raster für die Farben Schwarz, Grau und Orange übereinstimmen.

2. Druckverfahren nach Anspruch 1, **dadurch gekennzeichnet, dass** die Winkelung der Raster der Farben Magenta und Grün übereinstimmen, und dass die Winkelung der Raster der Farben Gelb und Cyan voneinander abweicht.

3. Druckverfahren nach Anspruch 1 und 2, **dadurch gekennzeichnet, dass**, bezogen auf den willkürlich mit der Winkelung 0° angenommenen Raster der Farbe Gelb, die Raster der anderen Farben folgende Winkel aufweisen: Cyan 15,6°, Magenta bzw. Grün 45,5°, und Orange bzw. Grau bzw. Schwarz 74,8°.

4. Druckverfahren nach einem der voranstehenden Ansprüche, **dadurch gekennzeichnet, dass** die Farbdichte von Orange 1,2; von Gelb 1,2; von Magenta 1,4; von Cyan 1,4; von Grau 0,6; von Grün 1,1 und von Schwarz 1,6 beträgt.

5. Druckverfahren nach einem der voranstehenden Ansprüche, **dadurch gekennzeichnet, dass** folgende Pigmente verwendet werden:
| | | |
|---|---|---|
| Orange P.O. 34 | Formelnummer 21115 | CAS: 15793-73-4 |
| Gelb P.Y. 126 | Formelnummer 21101 | CAS: 90268-23-8 |
| Magenta P.R. 57:1 | Formelnummer 15850:1 | CAS: 5281-04-9 |
| Cyan P.B. 15:4 | Formelnummer 74160 | CAS:147-14-8 |
| Grün P.G. 7 | Formelnummer 74260 | CAS: 1328-53-6 |
| Grau P.B. 7 | Formelnummer 77266 | CAS: 1333-86-4 und |
| Schwarz P.B1.7/P.B1. 15:4 | | |

## Claims

1. Printing method, in particular for printing plates or bags for packaging food products, based on seven colour printing using the four basic colours cyan, magenta, yellow and black and three further colours of which two are orange and green, wherein the seventh colour is grey and the angle of the screens for the colours black, grey and orange is the same.

2. Printing method according to claim 1, **characterised in that** the angle of the screens for the colours magenta and green is the same, and **in that** the angle of the screens of the colours yellow and cyan differs.

3. Printing method according to claims 1 and 2, **characterised in that**, based on the screen of the colour yellow, which screen is arbitrarily assumed to have an angle of 0°, the screens of the other colours have the following angles: cyan 15.6°, magenta and green 45.5°, and orange and green and black 74.8°.

4. Printing method according to any one of the preceding claims, **characterised in that** the ink density of orange is 1.2; of yellow is 1.2; of magenta is 1.4; of cyan is 1.4; of grey is 0.6; of green is 1.1 and of black is 1.6.

5. Printing method according to any one of the preceding claims, **characterised in that** the following pigments are used:
| | | |
|---|---|---|
| Orange P.O. 34 | Formula number 21115 | CAS No.: 15793-73-4 |
| Yellow P.Y. 126 | Formula number 21101 | CAS No.: 90268-23-8 |
| Magenta P.R. 57:1 | Formula number 15850:1 | CAS No.: 5281-04-9 |
| Cyan P.B. 15:4 | Formula number 74160 | CAS No.: 147-14-8 |
| Green P.G. 7 | Formula number 74260 | CAS No.: 1328-53-6 |
| Grey P.B. 7 | Formula number 77266 | CAS No.: 1333-86-4 and |
| Black P.BI. 7/P.BI. 15:4 | | |

## Revendications

1. Procédé d'impression, en particulier pour imprimer des platines ou des sachets pour l'emballage d'aliments, sur la base de l'impression à sept couleurs avec les quatre couleurs primaires, à savoir le cyan, le magenta, le jaune et le noir, et trois autres couleurs, dont deux sont l'orange et le vert, la septième couleur étant le gris, et les angles de trame étant identiques pour les couleurs noire, grise et orange.

2. Procédé d'impression selon la revendication 1, **caractérisé par le fait que** les angles de trame des couleurs magenta et verte sont identiques, et que les angles de trame des couleurs jaune et cyan sont différents.

3. Procédé d'impression selon les revendications 1 et 2, **caractérisé par le fait que**, par rapport à la trame de la couleur jaune à laquelle on attribue de façon arbitraire l'angle 0°, les trames des autres couleurs présentent les angles suivants : cyan 15,6°, magenta et vert 45,5° et orange et gris et noir 74,8°.

4. Procédé d'impression selon une des revendications précédentes, **caractérisé par le fait que** la densité optique est de 1,2 pour l'orange, de 1,2 pour le jaune, de 1,4 pour le magenta, de 1,4 pour le cyan, de 0,6 pour le gris, de 1,1 pour le vert et de 1,6 pour le noir.

5. Procédé d'impression selon une des revendications précédentes, **caractérisé par le fait que** l'on utilise les pigments suivants :
| | | |
|---|---|---|
| Orange P.O. 34 | Numéro de formule 21115 | CAS : 15793-73-4 |
| Jaune P.Y. 126 | Numéro de formule 21101 | CAS : 90268-23-8 |
| Magenta P.R. 57:1 | Numéro de formule 15850:1 | CAS : 5281-04-9 |
| Cyan P.B. 15:4 | Numéro de formule 74160 | CAS : 147-14-8 |
| Vert P.G. 7 | Numéro de formule 74260 | CAS : 1328-53-6 |
| Gris P.B. 7 | Numéro de formule 77266 | CAS : 1333-86-4 et |
| Noir P.B1. 7/P.B1. 15:4 | | |
